# EUROPEAN PATENT APPLICATION

(11) **EP 4 768 635 A1**
(43) Date of publication of application: **01.07.2026**
(21) Application number: 24921290.3
(22) Date of filing: 28.06.2024
(51) Int. Cl.: C25D 1/04, C25D 3/38, C22C 9/00, H01M 4/66, H01M 10/0525

(54) **ELECTROLYTIC COPPER FOIL AND PREPARATION METHOD THEREFOR, AND LITHIUM BATTERY**

(30) Priority: 29.01.2024 CN 202410122292
(71) Applicant: Eve Energy Co., Ltd, Huizhou, Guangdong 516006 (CN)
(72) Inventor: ZHAO, Mingjuan, Guangdong 516006 (CN)
(74) Representative: Zhu, Puxing
(86) International application number: PCT/CN2024/102349
(87) International publication number: WO 2025/161253

(57) **Abstract**

An electrodeposited copper foil and a preparation method thereof and a lithium battery are provided. The electrodeposited copper foil contains copper having a content of greater than or equal to 99.9 wt% and a chlorine element having a content of 100-200 µg/g, and further contains a gold element having a content of 80-200 µg/g and a platinum element having a content of 80-200 µg/g. The electrodeposited copper foil containing the gold element and the platinum element can remedy stripe breakage occurring in the rolling process of a lithium-ion battery and potential safety hazards during the use of the battery, thereby improving the elongation and the production process efficiency; in addition, minor addition of gold and platinum exhibits good electrical conductivity, thereby improving the electrical conductivity of the foil material.

## Description

The present disclosure claims priority to Chinese Patent Application No. 202410122292X filed with the Chinese Patent Office on January 29, 2024, the entire disclosures of which are incorporated by reference into the present disclosure.

### TECHNICAL FIELD

The present disclosure relates to the field of battery technology, and in particular to an electrodeposited copper foil and a preparation method thereof, as well as a lithium battery.

### BACKGROUND

Copper foil, used as the negative electrode current collector in lithium-ion batteries, is a key material in lithium-ion battery manufacturing due to its excellent ductility, high gloss, and superior performance. During the lithium-ion battery manufacturing process, rolling the electrode sheet improves the peel strength between the active material and the current collector foil, increasing the energy density of the battery cell. It also reduces the porosity between the active material, conductive agent, and binder within the electrode sheet, lowering the battery's resistance and ensuring consistent battery performance and the density and thickness of the electrode sheet surface material.

### SUMMARY

### Technical Problem

During the cold pressing process of copper foil, as the energy density increases, the foil material becomes thinner and thinner, and may cause strip breakage during the rolling process, affecting production capacity; at the same time, the charging and discharging of the finished battery during use will also cause the copper foil to break, posing a safety hazard.

### Solution

In a first aspect, the present disclosure provides an electrodeposited copper foil comprising: a copper having a content of ≥ 99.9wt%, a chlorine element having a content of 100-200 µg/g, and further comprising: a gold element having a content of 80-200 µg/g, and a platinum element having a content of 80-200 µg/g.

In a second aspect, the present disclosure also provides a preparation method for an electrodeposited copper foil, comprising adding an additive to a sulfuric acid-copper sulfate solution, performing electrolysis as an electrolyte solution, washing and drying the resulted raw foil to obtain an electrodeposited copper foil; the additive includes graphene oxide, guar gum, hydroxypropyl methylcellulose, polyethylene glycol, polyethyleneimine and a chlorine-containing compound, and the additive further includes a soluble salt of a gold element and a soluble salt of a platinum element.

In a third aspect, the present disclosure also provides a lithium battery, comprising the electrodeposited copper foil provided in the present disclosure or the electrodeposited copper foil prepared by the preparation method provided in the present disclosure.

### Beneficial effects

The beneficial effects of the electrodeposited copper foil, its preparation method, and lithium battery provided in the present disclosure are: the electrodeposited copper foil prepared in the present disclosure can remedy the strip breakage during the roller pressing process of the lithium-ion battery and the safety hazard occurred during the use of the battery. The addition of gold and platinum during the copper foil production process can improve the elongation, improve the process production efficiency, and prevent the occurrence of safety accidents; at the same time, the addition of a small amount of gold and platinum has better conductivity, thereby improving the conductivity of the foil material.

### DETAILED DESCRIPTION

### Example 1

The additive is added to the sulfuric acid-copper sulfate solution as an electrolyte solution, electrolysis is carried out at a temperature of 45°C and a current density of 53 A/dm² and the resulted raw foil is washed and dried to obtain the electrodeposited copper foil. Specifically, the raw foil is washed with water, washed with an acid, washed with water again, polished, and baked to obtain a high-ductility electrodeposited copper foil;

In the electrolyte solution:
Polyethylene glycol with a molecular weight of 4000 has a concentration of 8 mg/L;
Polyethyleneimine with a molecular weight of 9000 has a concentration of 35 mg/L;
The concentration of hydroxypropyl methylcellulose is 15 mg/L;
The concentration of Cu²⁺ is 65 g/L and the concentration of sulfuric acid is 120 g/L;
The concentration of Cl⁻ in the chlorine-containing compound is 20 mg /L;
The concentration of graphene oxide is 5 mg/L;
The concentration of guar gum is 12 mg/L;
The gold element concentration of potassium gold cyanide is 20 mg/L;
The platinum element concentration of platinum nitrate is 35 mg/L.

### Example

The additive is added to the sulfuric acid-copper sulfate solution as an electrolyte solution, electrolysis is carried out at a temperature of 55°C and a current density of 45 A/dm² and the resulted raw foil is washed and dried to obtain the electrodeposited copper foil. Specifically, the raw foil is washed with water, washed with an acid, washed with water again, polished, and baked to obtain a high-ductility electrodeposited copper foil;

In the electrolyte solution:
Polyethylene glycol with a molecular weight of 6000 has a concentration of 10 mg/L;
Polyethyleneimine with molecular weight of 8000 has a concentration of 28 mg/L;
The concentration of hydroxypropyl methylcellulose is 10 mg/L;
The concentration of Cu²⁺ is 80 g/L and the concentration of sulfuric acid is 180 g/L;
The concentration of Cl⁻ in the chlorine-containing compound is 15 mg/L;
The concentration of graphene oxide is 5 mg/L;
The concentration of guar gum is 12 mg/L;
The gold element concentration of potassium gold cyanide is 25 mg/L;
The platinum element concentration of platinum nitrate is 25 mg/L.

### Example

The additive is added to the sulfuric acid-copper sulfate solution as an electrolyte solution, electrolysis is carried out at a temperature of 60°C and a current density of 70 A/dm² and the resulted raw foil is washed and dried to obtain the electrodeposited copper foil. Specifically, the raw foil is washed with water, washed with an acid, washed with water again, polished, and baked to obtain a high-ductility electrodeposited copper foil;

In the electrolyte solution:
Polyethylene glycol with a molecular weight of 3000 has a concentration of 5 mg/L;
Polyethyleneimine with molecular weight of 10000 has a concentration of 35 mg/L;
The concentration of hydroxypropyl methylcellulose is 8 mg/L;
The concentration of Cu²⁺ is 70 g/L and the concentration of sulfuric acid is 130 g/L;
The concentration of Cl⁻ in the chlorine-containing compound is 30 mg/L;
The concentration of graphene oxide is 8 mg/L;
The concentration of guar gum is 15 mg/L;
The gold element concentration of potassium gold cyanide is 30 mg/L;
The platinum element concentration of platinum nitrate is 20 mg/L.

### Example

The additive is added to the sulfuric acid-copper sulfate solution as an electrolyte solution, electrolysis is carried out at a temperature of 40°C and a current density of 80 A/dm² and the resulted raw foil is washed and dried to obtain the electrodeposited copper foil. Specifically, the raw foil is washed with water, washed with an acid, washed with water again, polished, and baked to obtain a high-ductility electrodeposited copper foil;

In the electrolyte solution:
Polyethylene glycol with a molecular weight of 5000 has a concentration of 7 mg/L;
Polyethyleneimine with molecular weight of 6000 has a concentration of 40 mg/L;
The concentration of hydroxypropyl methylcellulose is 13 mg/L;
The concentration of Cu²⁺ is 90 g/L and the concentration of sulfuric acid is 190 g/L;
The concentration of Cl⁻ in the chlorine-containing compound is 23 mg/L;
The concentration of graphene oxide is 3 mg/L;
The concentration of guar gum is 12 mg/L;
The gold element concentration of potassium gold cyanide is 37 mg/L;
The platinum element concentration of platinum nitrate is 23 mg/L.

### Example

The additive is added to the sulfuric acid-copper sulfate solution as an electrolyte solution, electrolysis is carried out at a temperature of 45°C and a current density of 40 A/dm² and the resulted raw foil is washed and dried to obtain the electrodeposited copper foil. Specifically, the raw foil is washed with water, washed with an acid, washed with water again, polished, and baked to obtain a high-ductility electrodeposited copper foil;

In the electrolyte solution:
Polyethylene glycol with a molecular weight of 4300 has a concentration of 9 mg/L;
Polyethyleneimine with molecular weight of 5600 has a concentration of 28 mg/L;
The concentration of hydroxypropyl methylcellulose is 8 mg/L;
The concentration of Cu²⁺ is 85 g/L and the concentration of sulfuric acid is 175 g/L;
The concentration of Cl⁻ in the chlorine-containing compound is 33 mg/L;
The concentration of graphene oxide is 5 mg/L;
The concentration of guar gum is 17 mg/L;
The gold element concentration of potassium gold cyanide is 33 mg/L;
The platinum element concentration of platinum nitrate is 45 mg/L.

### Example

The additive is added to the sulfuric acid-copper sulfate solution as an electrolyte solution, electrolysis is carried out at a temperature of 45°C and a current density of 40 A/dm² and the resulted raw foil is washed and dried to obtain the electrodeposited copper foil. Specifically, the raw foil is washed with water, washed with an acid, washed with water again, polished, and baked to obtain a high-ductility electrodeposited copper foil;

In the electrolyte solution:
Polyethylene glycol with a molecular weight of 4300 has a concentration of 4 mg/L;
Polyethyleneimine with molecular weight of 5600 has a concentration of 20 mg/L;
The concentration of hydroxypropyl methylcellulose is 4 mg/L;
The concentration of Cu²⁺ is 40 g/L and the concentration of sulfuric acid is 100 g/L;
The concentration of Cl⁻ in the chlorine-containing compound is 10 mg/L;
The concentration of graphene oxide is 2 mg/L;
The concentration of guar gum is 10 mg/L;
The gold element concentration of potassium gold cyanide is 20 mg/L;
The platinum element concentration of platinum nitrate is 20 mg/L.

### Example

The additive is added to the sulfuric acid-copper sulfate solution as an electrolyte solution, electrolysis is carried out at a temperature of 65°C and a current density of 45 A/dm² and the resulted raw foil is washed and dried to obtain the electrodeposited copper foil. Specifically, the raw foil is washed with water, washed with an acid, washed with water again, polished, and baked to obtain a high-ductility electrodeposited copper foil;

In the electrolyte solution:
Polyethylene glycol with a molecular weight of 8000 has a concentration of 10 mg/L;
Polyethyleneimine with molecular weight of 10000 has a concentration of 50 mg/L;
The concentration of hydroxypropyl methylcellulose is 20 mg/L;
The concentration of Cu²⁺ is 105 g/L and the concentration of sulfuric acid is 200 g/L;
The concentration of Cl⁻ in the chlorine-containing compound is 40 mg/L;
The concentration of graphene oxide is 8 mg/L;
The concentration of guar gum is 18 mg/L;
The gold element concentration of potassium gold cyanide is 50 mg/L;
The platinum element concentration of platinum nitrate is 50 mg/L.

### Comparative Example 1

The lithium battery copper foil was prepared by the same method as in Example 1 without adding potassium gold cyanide and platinum nitrate, while other components and data remained unchanged.

### Comparative Example 2

The lithium battery copper foil was prepared by the same method as in Example 1 without adding platinum nitrate, while other components and data remained unchanged.

### Comparative Example 3

The lithium battery copper foil was prepared by the same method as in Example 1 without adding potassium gold cyanide, while other components and data remained unchanged.

Experimental results: The contents of each element in the electrodeposited copper foil obtained in Examples 1-7 and Comparative Examples 1-3 were measured. The measured results were shown in the following table:

**[Table 1_sm_0001]**

| Group Class | Copper content (wt%) | Chlorine element content (µg/g) | Gold element content (µg/g) | Platinum element content (µg/g) |
|---|---|---|---|---|
| Example 1 | 99.94 | 156.4 | 85.3 | 153.9 |
| Example 2 | 99.96 | 152.8 | 113.5 | 126.8 |
| Example 3 | 99.95 | 178.3 | 162.6 | 91.8 |
| Example 4 | 99.96 | 161.6 | 182.1 | 123.2 |
| Example 5 | 99.94 | 181.3 | 173.6 | 190.7 |
| Example 6 | 99.92 | 100.7 | 80.4 | 80.2 |
| Example 7 | 99.98 | 199.3 | 199.6 | 199.8 |
| Comparative Example 1 | 99.92 | 145.6 | 0 | 0 |
| Comparative Example 2 | 99.94 | 152.9 | 90.2 | 0 |
| Comparative Example 3 | 99.93 | 164.6 | 0 | 166.3 |

The electrodeposited copper foils prepared in Examples 1-7 and Comparative Examples 1-3 were tested in terms of tensile strength and elongation. The test results were shown in the following table:

**[Table_sm_0002] 6**

| Group Class | Tensile strength ( MPa ) | Elongation (%) | Resistivity (Ω) |
|---|---|---|---|
| Example 1 | 540 | 11.8 | 1.63*10⁻⁸ |
| Example 2 | 530 | 11.3 | 1.65*10⁻⁸ |
| Example 3 | 490 | 10.4 | 1.68*10⁻⁸ |
| Example 4 | 510 | 9.9 | 1.66*10⁻⁸ |
| Example 5 | 570 | 10.2 | 1.67*10⁻⁸ |
| Example 6 | 505 | 10.3 | 1.66*10⁻⁸ |
| Example 7 | 512 | 10.7 | 1.65*10⁻⁸ |
| Comparative Example 1 | 410 | 5.4 | 1.72*10⁻⁸ |
| Comparative Example 2 | 430 | 7.3 | 1.70*10⁻⁸ |
| Comparative Example 3 | 450 | 8.1 | 1.69*10⁻⁸ |

From the above table, it may be seen that in a case that the temperature is 40-65°C and the current density is 40-80A/dm², both of the tensile strength and elongation of the electrodeposited copper foil prepared using the gold and platinum additives were greatly improved, the electrical conductivity of the electrodeposited copper foil was reduced, and the electrical conductivity of the electrodeposited copper foil was improved.

## Claims

1. An electrodeposited copper foil comprising: a copper having a content ≥ 99.9 wt%, a chlorine element having a content of 100-200 µg/g, and further comprising a gold element having a content of 80-200 µg/g, and a platinum element having a content of 80-200 µg/g.

2. A preparation method for an electrodeposited copper foil according to claim 1, comprising: adding an additive to a sulfuric acid-copper sulfate solution, performing electrolysis as an electrolyte solution, and washing and drying the resulted raw foil to obtain the electrodeposited copper foil; the additive comprises graphene oxide, guar gum, hydroxypropyl methylcellulose, polyethylene glycol, polyethyleneimine, and a chlorine-containing compound; and the additive further comprises a soluble salt of the gold element and a soluble salt of the platinum element.

3. The preparation method according to claim 2, wherein the soluble salt of the gold element is selected from one or more of sodium chloroaurate and potassium goldcyanide.

4. The preparation method according to claim 2, wherein the soluble salt of the platinum element is selected from one or more of platinum acetate and platinum nitrate.

5. The preparation method according to claim 2, wherein, in the electrolyte solution, a concentration of Cu²⁺ is 40 ~105 g/L, and a concentration of sulfuric acid is 100 ~ 200 g/L.

6. The preparation method according to claim 2, wherein, in the electrolyte solution, a concentration of graphene oxide is 2 ~ 8 mg/L, a concentration of guar gum is 10 ~ 18 mg/L, a concentration of the gold element is 20 ~ 50 mg/L, a concentration of the platinum element is 20 ~ 50 mg/L, a concentration of hydroxypropyl methylcellulose is 4 ~ 20 mg/L, a concentration of polyethylene glycol is 4 ~ 10 mg/L, a concentration of polyethyleneimine is 20 ~ 50 mg/L, and a concentration of Cl⁻ in the chlorine-containing compound is 10 ~ 40 mg/L.

7. The preparation method according to claim 2, wherein a molecular weight of the polyethylene glycol is 3000 ~ 8000, and a molecular weight of the polyethyleneimine is 5000 ~ 10000.

8. The preparation method according to claim 2, wherein during a process of electrolysis, a temperature of the electrolyte solution is controlled at 40-65°C, and an average current density on a surface of the cathode electrode is 40-80 A/dm².

9. The preparation method according to claim 2, wherein a process of washing the raw foil comprises performing multiple water washes, followed by performing washing with dilute hydrochloric acid, and then performing multiple water washes.

10. A lithium battery comprising the electrodeposited copper foil according to claim 1 or the electrodeposited copper foil prepared by the preparation method according to any one of claims 2-9.
